(19) Europäisches Patentamt / European Patent Office / Office européen des brevets

(11) **EP 4 368 678 A1**

(12) **DEMANDE DE BREVET EUROPEEN**

(43) Date de publication:
**15.05.2024   Bulletin 2024/20**

(21) Numéro de dépôt: 23208936.7

(22) Date de dépôt: **09.11.2023**

(51) Classification Internationale des Brevets (IPC):
**C09D 127/06** (2006.01)    **C09D 7/61** (2018.01)
**B32B 27/20** (2006.01)    **E04F 15/00** (2006.01)
**C08K 3/26** (2006.01)    **E04F 15/10** (2006.01)
**E04F 15/08** (2006.01)

(52) Classification Coopérative des Brevets (CPC):
(C-Sets disponibles)
**C08K 3/26; C09D 7/61; E04F 15/087; E04F 15/105;
E04F 15/107;** C08K 2003/265; C08K 2201/005

(Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **10.11.2022   FR 2211769**

(71) Demandeur: **GERFLOR
69009 Lyon (FR)**

(72) Inventeur: **ESBELIN, Christian
69009 LYON (FR)**

(74) Mandataire: **Cabinet Laurent & Charras
CS 70 203
15 rue Camille de Rochetaillée
42005 Saint-Etienne Cedex 1 (FR)**

(54)    **REVETEMENT DE SOL OU MUR**

(57)    L'invention concerne un procédé de fabrication d'un revêtement de sol ou mur comprenant au moins une couche composée au moins d'une matière plastique et d'au moins une charge minérale, caractérisé en ce qu'il consiste à utiliser un déchet minéral en tant que charge minérale.

**EP 4 368 678 A1**

(52) Classification Coopérative des Brevets (CPC):
(Cont.)

C-Sets
**C08K 3/26, C08L 27/06**

**Description**

**Domaine technique**

L'invention se rapporte au domaine technique des revêtements de sols et murs pouvant se présenter sous la forme d'un rouleau ou sous la forme d'un panneau, d'une dalle, d'une lame, ou similaire.

L'invention concerne notamment un procédé de fabrication de revêtement de sol ou mur comprenant une matière plastique tel que du polychlorure de vinyle (PVC) et une charge minérale présentant un impact environnemental diminué par rapport à l'art antérieur. Le revêtement de sol ou mur selon l'invention peut consister en une couche pour former un revêtement de sol homogène ou plusieurs couches liées entre elles pour former un revêtement de sol hétérogène. L'invention concerne également le revêtement de sol ou mur correspondant.

**Art antérieur**

Les compositions permettant d'obtenir des revêtements de sol au mur à partir d'une matière plastique comprennent généralement un polymère, tel que du PVC, éventuellement plastifié, ainsi que de la charge minérale. La charge minérale permet notamment de modifier les propriétés de la matière plastique utilisée. Dans le cas du PVC, la charge minérale couramment utilisée est par exemple du carbonate de calcium.

L'ajout de charges minérales permet notamment d'améliorer la résistance à la dilatation et au poinçonnement d'une couche obtenue à partir de PVC. La couche obtenue est également rigidifiée en fonction du taux de charge de la composition.

Ces charges utilisées dans la fabrication de revêtements de sol et murs à partir de matières plastiques sont toutes issues de procédés d'extraction en carrières ou mines. Cette opération implique une consommation importante de matière vierge et non renouvelable. L'extraction de ces charges entraine également des nuisances importantes sur l'environnement direct du lieu d'extraction, notamment de grandes quantités de poussières, du bruit, ainsi qu'un fort impact visuel pendant de longues années suite à l'exploitation d'un lieu. D'autre part, l'extraction et le transport de ces charges minérales par la route émet une quantité importante de $CO_2$ qui contribue lourdement à l'empreinte carbone des revêtements les utilisant.

Les producteurs de revêtements de sols et murs sont donc à la recherche de solutions permettant de diminuer l'impact de leurs produits sur l'environnement, dès leur fabrication et tout au long de leur durée de vie.

**Exposé de l'invention**

L'un des buts de l'invention est donc de diminuer l'impact environnemental d'un revêtement de sol ou mur obtenu à partir d'une composition comprenant une matière plastique et une charge minérale tout en gardant des propriétés mécaniques et d'usage satisfaisantes. L'invention a notamment pour but de diminuer l'extraction de matière vierge et l'impact $CO_2$ lié à la fabrication du revêtement de sol ou mur.

À cet effet, il a été mis au point un procédé de fabrication d'un revêtement de sol ou mur comprenant au moins une couche composée au moins d'une matière plastique et d'au moins une charge minérale, qui consiste à utiliser un déchet minéral en tant que charge minérale.

Un déchet minéral peut notamment être obtenu à partir d'un procédé de recyclage, par exemple un procédé de recyclage de déchets de l'industrie du bâtiment ou de l'exploitation de carrières ou mines. Un déchet minéral peut également être obtenu à partir de chutes ou de rebuts issus de procédés de découpe ou de transformation de minerai vierge. Le déchet minéral est une charge minérale recyclée au sens qu'il provient d'une seconde utilisation de déchets contenant une charge minérale en fin de vie ou d'une charge minérale en fin de vie ou encore de la revalorisation de chutes ou de rebuts de charge minérale.

L'invention permet donc une diminution de l'empreinte $CO_2$ du revêtement et de son procédé d'obtention, une diminution de la pollution visuelle et auditive, de l'émission de poussières et de dégradation des ressources en utilisant une ressource au préalable abandonnée dans des décharges sauvages ou destinée à l'enfouissement. En intégrant ces déchets minéraux ou charges minérales recyclées, la part de ressources recyclées dans le revêtement de sol ou mur est ainsi augmentée et l'impact environnemental diminué.

L'invention concerne également un revêtement de sol ou mur issu du procédé de fabrication selon l'invention.

De façon préférentielle, le revêtement de sol ou mur selon l'invention présente une couche comprenant un déchet minéral obtenue par enduction, par exemple consistant en un plastisol gélifié.

Plus particulièrement, le déchet minéral pouvant être utilisé selon l'invention est un déchet recyclé selon la définition de la norme ISO 14021 :2016, par exemple une charge minérale recyclée.

De façon avantageuse la composition de la couche comprenant un déchet minéral comprend également une charge minérale vierge.

De façon avantageuse la composition de la couche comprenant un déchet minéral comprend également une charge végétale et/ou synthétique.

Afin d'utiliser des déchets minéraux dans la composition d'une couche selon l'invention, il peut être nécessaire de procéder à un traitement par concassage, broyage, éventuellement lavage, micronisation, éventuellement séchage, et d'un tri par taille pour obtenir une distribution granulométrique adaptée aux procédés de mise en oeuvre de revêtement de sols ou murs, et aux propriétés d'usage attendues. Le but de ces opérations et de permettre d'atteindre des granulométries intégrables dans des compositions et procédés d'obtention de revêtements de sols et murs à partir de compositions de matières plastiques.

Dans le cas de couches obtenues par des procédés d'enduction, qui consistent à chauffer rapidement et à forte température un plastisol PVC pour le gélifier, il a été constaté que l'impact du taux d'humidité du déchet minéral est très important. Il a ainsi été constaté qu'une teneur en humidité inférieure à 0,3% du déchet minéral en tant que charge minérale permettait de garantir l'obtention d'une couche obtenue par enduction sans bulles, trous ou autres phénomènes dégradant l'aspect visuel et les propriétés mécaniques de la couche. La teneur en humidité peut notamment être mesurée par un calcul de perte de masse suite à une opération de chauffage avec une balance-dessiccateur du type MX-50 fabriquée par la société A&D. Cet appareil procède à une chauffe d'un échantillon de 5 grammes à 130°C et mesure la masse sèche de l'échantillon lorsque la vitesse de dessiccation est inférieure à 0,05% par min. La teneur en humidité est calculée selon la formule suivante :

$$\text{Teneur en humidité} = (\text{masse d'échantillon humide} - \text{masse d'échantillon sèche})/(\text{masse d'échantillon humide} \times 100)$$

Le déchet minéral présente de préférence une granulométrie comprise entre 5 et 500 microns basée sur les mesures de D98, préférentiellement comprise entre 5 et 250 microns, et encore plus préférentiellement entre 10 et 100 microns selon le procédé de mise en oeuvre des compositions incluant ces charges recyclées. Le D98 correspond à la taille de particule pour laquelle 98% de l'échantillon se trouve en dessous de cette dimension.

Dans le cas d'une couche obtenue par un procédé d'enduction, il a également été constaté que la quantité de particules fines dans le déchet minéral intégré à la composition à un impact important sur la viscosité. Si le déchet minéral présente trop de particules fines, la viscosité augmente de façon trop importante et peut venir obstruer les procédés d'enduction par racle. De préférence, le déchet minéral présente ainsi une granulométrie comprise entre 0,5 et 10 microns basée sur les mesures de D10, préférentiellement comprise entre 1 et 7 microns selon le procédé de mise en oeuvre des compositions incluant ces charges recyclées. Le D10 correspond à la taille de particules pour laquelle 10% de l'échantillon se trouve en dessous de cette dimension.

De façon très préférentielle et pour garantir une bonne intégration du déchet minéral dans les procédés d'enduction et de bonnes propriétés mécaniques, celui-ci présente une granulométrie entre 5 et 500 microns, préférentiellement comprise entre 5 et 250 microns, et encore plus préférentiellement entre 10 et 100 microns basée sur les mesures de D98 ainsi qu'une granulométrie comprise entre 0,5 et 10 microns, préférentiellement entre 1 et 7$\mu$m basée sur les mesures de D10.

La composition de la couche comprenant un déchet minéral selon l'invention comprend entre 5 et 75%, préférentiellement entre 15 et 60% en poids de déchet minéral par rapport au poids de la couche de manière à conserver de bonnes propriétés de résistance au trafic et à la dilatation.

Le revêtement de sol ou mur selon l'invention présente une couche comprenant un déchet minéral pouvant être obtenue par un procédé de pressage, de calandrage ou d'extrusion.

Les matières plastiques pouvant être utilisées dans la composition de la couche comprenant un déchet minéral sont par exemples les polyoléfines (PE, PP), le PVC, PVB, PLA, TPU, les dérivés cellulosiques, les élastomères, seuls ou en mélanges.

Alternativement une matière plastique pouvant être utilisée dans la composition de la couche comprenant un déchet minéral comprend du linoleum.

Avantageusement, la composition de la couche comprenant un déchet minéral comprend également un broyat de revêtements de sols ou murs recyclés, préférentiellement un broyat de revêtement obtenu à partir de PVC.

## Description détaillée de l'invention

L'invention concerne donc un procédé de fabrication d'un revêtement de sol ou mur comprenant au moins une couche composée au moins d'une matière plastique et d'au moins une charge minérale, qui consiste à utiliser un déchet minéral en tant que charge minérale.

Plus particulièrement, le déchet minéral est issu d'un procédé de recyclage ou est issu de chutes ou de rebuts.

L'invention concerne également un revêtement de sol issu du procédé de fabrication selon l'invention.

Un déchet minéral peut notamment être obtenu à partir de déchets minéraux issus de déconstruction de bâtiments, de plâtres, de briques, de carrelages, de céramiques. Ces déchets sont habituellement récoltés sur chantier puis utilisés comme remblais voire abandonnés ou enfouis. Cependant, par un procédé de concassage, broyage et tri par taille, il est possible d'intégrer ces déchets dans des revêtements de sols ou murs en tant que déchet minéral ou charges minérales recyclées.

Un déchet minéral peut également être obtenu à partir de terres d'excavations issus de chantier de fouilles ou de fondations lors de chantiers de construction ou de réhabilitation ou encore d'opérations de curages de zones navigables ou plans d'eau.

Un procédé d'intégration de ces déchet minéraux peut également comprendre une étape consistant à séparer les métaux des déchets minéraux afin d'éviter leur intégration dans le procédé de fabrication du revêtement de sol ou mur. Les métaux présentent en effet un risque de dégradation important pour les procédés de pressage, calandrage, extrusion ou enduction.

Un procédé d'intégration de ces déchet minéraux peut également comprendre une étape consistant à dépolluer les déchets minéraux afin d'éviter leur intégration dans le procédé de fabrication de revêtement de sol ou mur. Cette étape peut par exemple comprendre un tri par taille et/ou une décantation.

Un déchet minéral peut également être obtenu à partir de déchets et rebus d'exploitation de carrières, notamment de marbre, ainsi que des chutes de pose ou de fabrication provenant de l'industrie marbrière. Il est notamment constaté qu'une quantité importante de déchets et de chutes sont générés par cette industrie, et ce dès l'étape d'extraction, où 70 à 80% de la matière extraite et mise au rebut. En effet, le marbre étant avant tout recherché pour son aspect visuel, de nombreux blocs extraits et taillés ne satisfont pas les critères de sélection permettant leur utilisation comme parement ou pierre d'ornement et présentent des défauts d'aspects rédhibitoires. Ces blocs mis au rebut ainsi que les chutes de découpes sont donc déjà extraits de carrière mais habituellement inutilisables.

L'invention permet donc une diminution de l'empreinte $CO_2$ du revêtement et de son procédé d'obtention, une diminution de la pollution visuelle et auditive, de l'émission de poussières et de dégradation des ressources en utilisant une ressource au préalable destinée à l'enfouissement ou abandonnée sous forme de monticules instables, susceptibles de causer des glissements de terrain notamment en cas de fortes intempéries. En intégrant ces déchets minéraux, la part de ressources recyclées utilisées dans le revêtement de sol ou mur est ainsi augmentée.

Le déchet minéral pouvant être utilisé selon l'invention présente un caractère recyclé selon la définition de la norme ISO 14021 :2016.

Cette norme définie une ressource recyclée comme une caractéristique d'un produit, d'un emballage ou composant associé qui peut être détourné d'un flux habituel de déchets à travers les processus disponibles et programmes et peut être collecté, traité et réutilisé sous forme de matières premières.

De façon préférentielle, le revêtement de sol ou mur selon l'invention présente une couche utilisant un déchet minéral en tant que charge minérale obtenue par enduction, par exemple consistant en un plastisol gélifié.

L'invention a en effet un intérêt plus particulier dans le cas d'un procédé d'obtention d'une couche de PVC comprenant un déchet minéral par enduction puis gélification d'un plastisol. En effet, contrairement aux procédés de calandrage, pressage ou extrusion, les procédés par enduction de plastisol ne permettent pas d'incorporer directement dans le plastisol des broyats de revêtements recyclés provenant de chutes de pose ou d'autres sources. Le plastisol n'est par définition pas gélifié en amont du procédé de fabrication de la couche et présente une viscosité difficilement compatible à un mélange contenant des granulés ou copeaux de matières plastiques déjà gélifiés. Dans un plastisol, l'introduction de PVC recyclé ou de produits obtenus à partir de PVC recyclé, même micronisé, augmente considérablement la viscosité des plastisols, rendant difficile leur application par enduction à l'aide d'une racle notamment. L'invention concerne donc également une composition pour la réalisation d'un plastisol à partir de PVC comprenant un déchet minéral, le déchet minéral pouvant être utilisé selon l'invention présente par exemple un caractère recyclé selon la définition de la norme ISO 14021 :2016. L'invention permet ainsi la réalisation de couches et revêtements obtenus à partir de procédés d'enduction dont l'empreinte environnementale est réduite.

De façon avantageuse la composition de la couche comprenant un déchet minéral comprend également une charge minérale vierge. Cette charge est par exemple choisie parmi les argiles, de la silice, du kaolin, du talc, de la craie, de la chaux, du talc, du carbonate de calcium, seules ou en combinaison.

De façon avantageuse la composition de ladite couche comprend également une charge végétale et/ou synthétique.

Afin d'utiliser un déchet minéral dans la composition d'une couche comprenant un déchet minéral selon l'invention, il peut être nécessaire de procéder à un traitement par concassage, broyage, éventuellement lavage, micronisation, éventuellement séchage, et d'un tri par taille du déchet minéral. Le but de ces opérations et de permettre d'atteindre des granulométries intégrables dans des compositions et procédés d'obtention de revêtements de sols et murs à partir de matières plastiques.

Le déchet minéral présente de préférence une granulométrie comprise entre 5 et 500 microns basée sur les mesures de D98 préférentiellement entre 5 et 250 microns, et encore plus préférentiellement entre 10 et 100 microns selon le procédé de mise en oeuvre des compositions incluant ces charges recyclées. Ceci permet notamment de garantir une viscosité adaptée au procédé de mise en oeuvre, de faciliter la dispersion dans une composition donnée, de réduire les risques de sédimentation et / ou de ségrégation dans des compositions préparées à l'avance, notamment dans les compositions de plastisol PVC liquides. D'autre part la granulométrie des charges recyclées à un impact sur les propriétés mécaniques des revêtements de sols, notamment leur rigidité, force et contrainte à la rupture. Une bonne granulométrie permet également d'éviter la formation de défauts d'aspect, notamment dans des couches calandrées ou enduites d'épaisseur fines, par exemple entre 0,1 et 2mm voire entre 0,1 et 1mm. Enfin, une bonne granulométrie permet d'optimiser les performances d'usage, notamment la résistance à la casse de moyens d'assemblages usinés sur des bords de revêtements en dalles ou lames. Le D98 correspond à la taille de particule pour laquelle 98% de l'échantillon se trouve en dessous de la dimension indiquée.

Avantageusement, la composition de la couche comprenant un déchet minéral comprend entre 5 et 75%, préférentiellement entre 15 et 60% en poids de déchet minéral par rapport au poids de la couche. Plus la quantité de charge recyclée est importante, plus l'impact environnemental est réduit. Cependant, selon son origine il peut être difficile d'intégrer plus de 60% de charge recyclée sans avoir recours à des procédés de tri couteux en temps et en énergie.

Le revêtement de sol ou mur selon l'invention présente une couche comprenant un déchet minéral pouvant être obtenue par un procédé de pressage, de calandrage ou d'extrusion au travers d'une filière plate.

Dans le cas du PVC, des procédés pouvant être utilisés sont également le pressage de granulés réalisés à partir d'une composition comprenant du PVC et un déchet minéral et mélangés à chaud et gélifiés ou encore par enduction de plastisol de PVC.

Les procédés de calandrage, d'extrusion ou de pressage ont l'avantage de permettre l'incorporation de broyat de chutes de pose de revêtement ou de broyat de revêtements déposés suite à leur renouvellement. Pour cela les chutes ou revêtements sont récupérés, broyés puis intégrés en granulés ou copeaux dans la composition en amont des procédés de calandrage, pressage ou extrusion. Selon l'invention, la composition de la couche comprenant un déchet minéral comprend avantageusement des broyats ou granulés de revêtements de sols ou murs, notamment de revêtements de sols ou murs PVC. En fonction de la quantité de matière recyclée introduite on diminue d'autant l'empreinte environnementale de la couche obtenue.

Les matières plastiques pouvant être utilisées dans la composition de la couche comprenant un déchet minéral sont par exemples les polyoléfines (PE, PP), le PVC, PVB, PLA, TPU, les dérivés cellulosiques, les élastomères, seuls ou en mélanges. Alternativement la matière plastique pouvant être utilisée dans la composition de la couche comprenant un déchet minéral comprend du linoleum.

Le revêtement de sol ou mur selon l'invention peut consister en une couche comprenant un déchet minéral pour former un revêtement de sol homogène ou plusieurs couches liées entre elles pour former un revêtement de sol hétérogène, au moins une des couches comprenant un déchet minéral.

Selon un mode de réalisation particulier, le revêtement de sol ou mur selon l'invention ne comprend que ladite couche comprenant un déchet minéral de manière à former un revêtement de sol homogène.

Selon un mode de réalisation particulier, ladite couche comprenant un déchet minéral comprend une face, laquelle face est liée à au moins une couche d'envers. De cette manière, il est obtenu un revêtement de sol hétérogène.

Il est présenté par la suite une exemple comparatif de revêtement de sol sous forme de rouleau destiné à être collé au sol lors de la pose.

Le revêtement de sol est une revêtement multicouche composé successivement et de la couche inférieure, destinée à être en contact avec le sol, vers la couche supérieure, destinée à être en contact avec l'utilisateur : d'une couche d'envers compacte appelée compact de lissage (CL), d'un semi-ouvré (CI-CD) comprenant une couche compacte d'imprégnation (CI), un voile de verre et une couche compacte décor (CD) imprimée. Cette couche décor (CD) est ensuite recouverte d'une couche d'usure transparente non chargée (CU), elle-même vernie. La couche d'usure transparente est obtenue par enduction et gélification d'un plastisol PVC plastifié non chargé. Le semi-ouvré est obtenu à partir de l'enduction et de la gélification sur chaque face d'un voile de verre des couches compacte d'imprégnation (CI) et compacte décor (CD) à partir de plastisol PVC plastifié comprenant une charge minérale. La couche compacte de lissage (CL) est obtenue par enduction et gélification d'un plastisol PVC plastifié comprenant une charge minérale.

La couche d'usure transparente présente une épaisseur de 0,1 mm, le compact décor (CD) de 0,2 mm, le compact d'imprégnation (CI) de 0,6 mm, le compact de lissage (CL) de 0,6 mm. Le voile de verre est noyé dans l'épaisseur du semi-ouvré (CI-CD). L'épaisseur de vernis est inférieure à 10 µm.

Ce revêtement de sol est donc obtenu par un procédé d'enduction multicouche en plusieurs étapes.

Pour cet exemple comparatif, des performances d'usage d'un revêtement de sol de référence obtenu avec un compact de lissage de formule A, sont comparées avec celles d'un revêtement de sol selon l'invention dans lequel le compact de lissage comprend un déchet minéral sous la forme de marbre recyclé de formule B. Les formules A et B des compacts de lissage sont résumées dans le tableau 1.

[Table 1]

| | Formule A | | Formule B | |
|---|---|---|---|---|
| | Part Pour Cent de Résine | Pourcentage massique | Part Pour Cent de Résine | Pourcentage massique |
| Plastifiants | 60,81 | 21,87 | 60,8 | 21,9 |
| Additifs | 2,26 | 0,81 | 2,3 | 0,8 |
| PVC | 100 | 35,96 | 100 | 36,0 |
| Calcaire vierge | 115 | 41,36 | | |
| Marbre recyclé | | | 115 | 41,36 |
| TOTAL FORMULE | 278,1 | 100,0 | 278,1 | 100,0 |

Pour les formules A et B, on trouvera comme additifs : des stabilisants et co-stabilisants thermiques, du pigment et des aides-procédé. Le marbre recyclé utilisé présente un D98 de 150 $\mu$m et un D50 de 35 $\mu$m.

Les performances des revêtements obtenus avec les formules A et B sont résumées dans le tableau 2.

[Table 2]

| Caractéristiques | | Unités | Revêtement de sol comprenant un compact de lissage selon la Formule A | Revêtement de sol comprenant un compact de lissage selon la Formule B |
|---|---|---|---|---|
| Souplesse en torsion | | ° | 66.6 | 62.8 |
| Facilité de découpe | | daN | 2.16 | 2.34 |
| Poinçonnement 2h30 (ISO 24343-1 Juin 2007) | | mm | 0.03 | 0.03 |
| Déchirure (NF EN ISO 24345 Avril 2012) | | daN | 7.8 | 7.7 |
| Adhérence CI-CD (NF EN ISO 24345 Avril 2012) | | daN/cm | 1.02 | 1.04 |
| Allongement (NF EN ISO 1421 Décembre 2017) | | % | 132 | 152 |
| Charge à la rupture (NF EN ISO 1421 Décembre 2017) | | daN/ 2cm | 23.6 | 25.7 |
| Module d'élasticité (QB 30 - M1-Ueatc Juillet 2015) | | daN/cm | 4.35 | 4.41 |
| | | N/mm$^2$ | 2.17 | 2.21 |
| Incurvation spontanée 6h à 80°C (NF EN ISO 23999 Août 2018) | | mm | 2.6 | 2.5 |
| Stabilité dimensionnelle(NF EN ISO 23999 Août 2018) | Sens long | % | -0.04 | -0.04 |
| | Sens travers | | -0.05 | -0.07 |

Le tableau 2 montre que le revêtement de sol selon l'invention présente de très bonnes performances d'usage d'un revêtement de sol enduit, comparativement au sol de référence de même architecture, mais produit avec un complexe de lissage contenant un carbonate de calcium obtenu par l'exploitation d'une carrière de calcaire génératrice de nuisances sonores et de pollutions.

En comparaison, le marbre recyclé utilisé dans la formule B, provient de la micronisation de déchets d'exploitation primaire d'une carrière de marbre (blocs non conformes, chutes de production d'objet ornementaux...), et a donc évité de faire exploser ou de davantage creuser intentionnellement une falaise dans le seul but de produire une charge fine. La revalorisation de ces sous-produits a donc évité une nouvelle exploitation irréversible d'une ressource naturelle non renouvelable à l'échelle du temps humain. Elle a aussi permis d'éviter l'amoncellement conséquent et difficile à gérer, d'énormes quantités de chutes de marbre auparavant laissées à même la carrière, et susceptibles d'engendrer des accidents graves en cas de glissement de terrain.

**Revendications**

1. Procédé de fabrication d'un revêtement de sol ou mur comprenant au moins une couche composée au moins d'une matière plastique et d'au moins une charge minérale, **caractérisé en ce qu'**il consiste à utiliser un déchet minéral en tant que charge minérale.

2. Procédé de fabrication d'un revêtement de sol ou mur selon la revendication 1, **caractérisé en ce que** le déchet minéral est issu d'un procédé de recyclage.

3. Procédé de fabrication d'un revêtement de sol ou mur selon la revendication1, **caractérisé en ce que** le déchet minéral est issu de chutes ou de rebuts.

4. Revêtement de sol ou mur issu du procédé de fabrication selon l'une des revendications 1 à 3.

5. Revêtement de sol ou mur selon la revendication 4, **caractérisé en ce que** la couche est un plastisol gélifié.

6. Revêtement de sol ou mur selon la revendication 4, **caractérisé en ce que** le déchet minéral est un déchet recyclé selon la définition de la norme ISO 14021:2016.

7. Revêtement de sol ou mur selon la revendication 4, **caractérisé en ce que** la composition de la couche comprend également une charge minérale vierge et/ou végétale et/ou synthétique.

8. Revêtement de sol ou mur selon la revendication 4, **caractérisé en ce que** le déchet minéral présente une granulométrie comprise entre 5 et 500 $\mu$m, préférentiellement entre 5 et 250$\mu$m.

9. Revêtement de sol ou mur selon la revendication 4, **caractérisé en ce que** la composition de la couche comprend entre 5 et 75%, préférentiellement entre 15 et 60% en poids de déchet minéral.

10. Revêtement de sol ou mur selon la revendication 4, **caractérisé en ce que** la matière plastique est choisie parmi les polyoléfines (PE, PP), le PVC, PVB, PLA, TPU, les dérivés cellulosiques, les élastomères, seuls ou en mélanges.

Europäisches
Patentamt

European
Patent Office

Office européen
des brevets

**RAPPORT DE RECHERCHE EUROPEENNE**

Numéro de la demande

**EP 23 20 8936**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 104 130 518 A (XIXIANG LINSEN BUILDING MATERIALS CO LTD) 5 novembre 2014 (2014-11-05) * abrégé * * alinéa [0002] * * exemples * * revendications * ----- | 1-10 | INV. C09D127/06 C09D7/61 B32B27/20 E04F15/00 C08K3/26 E04F15/10 E04F15/08 |
| X | CN 108 215 253 A (UNIV SHAANXI TECHNOLOGY; SHAANXI LIN SEN ENG CO LTD) 29 juin 2018 (2018-06-29) * exemples * * revendications 1,2 * ----- | 1-10 | |
| X | CN 106 905 798 A (TIANJIN YUFENGYUAN ENV PROT TECH CO LTD) 30 juin 2017 (2017-06-30) * exemples * * revendications * ----- | 1-10 | |
| X | EP 3 628 705 A1 (OMYA INT AG [CH]) 1 avril 2020 (2020-04-01) * alinéas [0059], [0266], [0274] - [0278] * * exemples * ----- | 1-10 | DOMAINES TECHNIQUES RECHERCHES (IPC) C08K C09D C09J B32B E04F |

Le présent rapport a été établi pour toutes les revendications

| Lieu de la recherche | Date d'achèvement de la recherche | Examinateur |
|---|---|---|
| Munich | 22 mars 2024 | Behm, Sonja |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 20 8936

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-03-2024

| Document brevet cité au rapport de recherche | | Date de publication | Membre(s) de la famille de brevet(s) | | Date de publication |
|---|---|---|---|---|---|
| CN 104130518 | A | 05-11-2014 | AUCUN | | |
| CN 108215253 | A | 29-06-2018 | AUCUN | | |
| CN 106905798 | A | 30-06-2017 | AUCUN | | |
| EP 3628705 | A1 | 01-04-2020 | AU | 2019349718 A1 | 04-03-2021 |
| | | | BR | 112021004138 A2 | 25-05-2021 |
| | | | CA | 3108378 A1 | 02-04-2020 |
| | | | CN | 112752800 A | 04-05-2021 |
| | | | EP | 3628705 A1 | 01-04-2020 |
| | | | EP | 3856848 A1 | 04-08-2021 |
| | | | KR | 20210069043 A | 10-06-2021 |
| | | | US | 2021355298 A1 | 18-11-2021 |
| | | | WO | 2020064968 A1 | 02-04-2020 |

EPO FORM P0460

Pour tout renseignement concernant cette annexe : voir Journal Officiel de l'Office européen des brevets, No.12/82